# DEMANDE DE BREVET EUROPEEN

(11) **EP 1 098 131 A1**
(43) Date de publication de la demande: **09.05.2001**
(21) Numéro de dépôt: 00403104.3
(22) Date de dépôt: 08.11.2000
(51) Int. Cl.: F16S 3/00, B62D 25/00, B21C 37/15, B21D 47/04, F01N 7/08, F16F 15/04

(54) **Profilé destiné notamment à former un élément de structure dans un véhicule automobile et procédé de fabrication d'un tel profilé**

(30) Priorité: 08.11.1999 FR 9913989
(71) Demandeur: Renault, 92100 Boulogne Billancourt (FR)
(72) Inventeur: Vivier, Pierre, 75014 Paris (FR)

(57) **Abrégé**

Ce profilé (1) destiné à former notamment un élément de structure dans un véhicule automobile, comprenant une partie périphérique (2) de forme tubulaire, est remarquable en ce qu'il comprend une âme (3) en matériau élastique introduite à force dans ladite partie périphérique (2) et maintenue solidaire de cette partie périphérique (2) notamment par sa tendance à retrouver élastiquement son volume naturel, pour le but d'élever les premières fréquences propres de vibration dudit profilé (1).

## Description

La présente invention se rapporte à un profilé destiné notamment à former un élément de structure dans un véhicule automobile et à un procédé de fabrication d'un tel profilé.

On utilise beaucoup de profilés dans la fabrication des véhicules automobiles, et notamment des profilés présentant une partie périphérique de forme tubulaire.

De tels profilés sont utilisés par exemple pour relier la planche de bord à la caisse d'un véhicule automobile, ou bien pour former une partie de la ligne d'échappement.

Un problème constant lié à l'utilisation de tels profilés est de limiter leur tendance à vibrer lorsque le véhicule automobile est en marche.

Pour ce faire, on a pu déterminer par le passé qu'il convenait d'élever les premières fréquences propres de vibration de ces profilés.

Jusqu'à ce jour, on obtenait cette élévation en augmentant l'épaisseur de la partie périphérique des profilés et/ou en augmentant le diamètre de ces profilés, ce qui conduisait inévitablement à une augmentation du poids et/ou de l'encombrement de ces profilés.

La présente invention a pour but de fournir un profilé permettant d'obtenir cette élévation de fréquences sans pour autant présenter les inconvénients susmentionnés.

On atteint ce but de l'invention avec un profilé destiné à former notamment un élément de structure dans un véhicule automobile, comprenant une partie périphérique de forme tubulaire, remarquable en ce qu'il comprend une âme en matériau élastique introduite à force dans ladite partie périphérique et maintenue solidaire de cette partie périphérique notamment par sa tendance à retrouver élastiquement son volume naturel, pour le but d'élever les premières fréquences propres de vibration dudit profilé.

Grâce à ces caractéristiques, on rigidifie la partie périphérique du profilé, et donc on élève les premières fréquences propres de vibration de ce profilé, avec des moyens nettement moins pondéreux et encombrants que ceux de la technique antérieure.

Suivant d'autres caractéristiques du profilé selon l'invention:
- ladite partie périphérique définit sensiblement un cylindre à symétrie de révolution,
- la section transversale de ladite âme définit sensiblement un S,
- la section transversale de ladite âme définit sensiblement un trèfle,
- la section transversale de ladite âme définit sensiblement un triskèle,
- les rayons de courbure de ladite âme sont adaptés pour assurer une surface de liaison avec ladite partie périphérique suffisamment étendue pour obtenir l'élévation de fréquences propres recherchée, et suffisamment réduite pour permettre l'introduction de ladite âme dans ladite partie périphérique,
- ladite âme est collée à l'intérieur de ladite partie périphérique,
- ladite âme est soudée aux extrémités de ladite partie périphérique,
- ladite âme est soudée par transparence laser sur toute la longueur de ladite partie périphérique.

L'invention concerne également un procédé de fabrication d'un profilé conforme à l'une quelconque des revendications précédentes, remarquable en ce qu'il comprend les étapes consistant:
- à fabriquer ladite partie périphérique,
- à fabriquer séparément ladite âme avec des dimensions telles que celle-ci ne puisse être introduite qu'à force dans ladite partie périphérique,
- à placer une filière contre une extrémité de ladite partie périphérique, le grand diamètre de cette filière étant supérieur ou égal au diamètre du cercle circonscrit à la section transversale de ladite âme et le petit diamètre de cette filière étant inférieur ou égal à la plus grande dimension transversale intérieure de ladite partie périphérique,
- à présenter ladite âme contre ladite filière, dans le prolongement de ladite partie périphérique, et
- à introduire à force ladite âme dans ladite partie périphérique.

Grâce à ces caractéristiques, on peut assembler de manière très simple le profilé selon l'invention, quels que soient les matériaux utilisés pour former la partie périphérique et l'âme.

D'autres caractéristiques et avantages de la présente invention apparaîtront à la lecture de la description qui va suivre et à l'examen du dessin annexé, dans lequel:
- la figure 1 est une vue en perspective d'un premier mode de réalisation du profilé selon l'invention, - la figure 2 est une vue en perspective d'un deuxième mode de réalisation de ce profilé,
- la figure 3 est une vue en perspective d'un troisième mode de réalisation de ce profilé, et
- la figure 4 est une vue en coupe longitudinale montrant la manière dont on réalise l'assemblage du profilé selon l'invention.

Sur ces figures, des références numériques identiques désignent des organes ou ensembles d'organes identiques ou analogues.

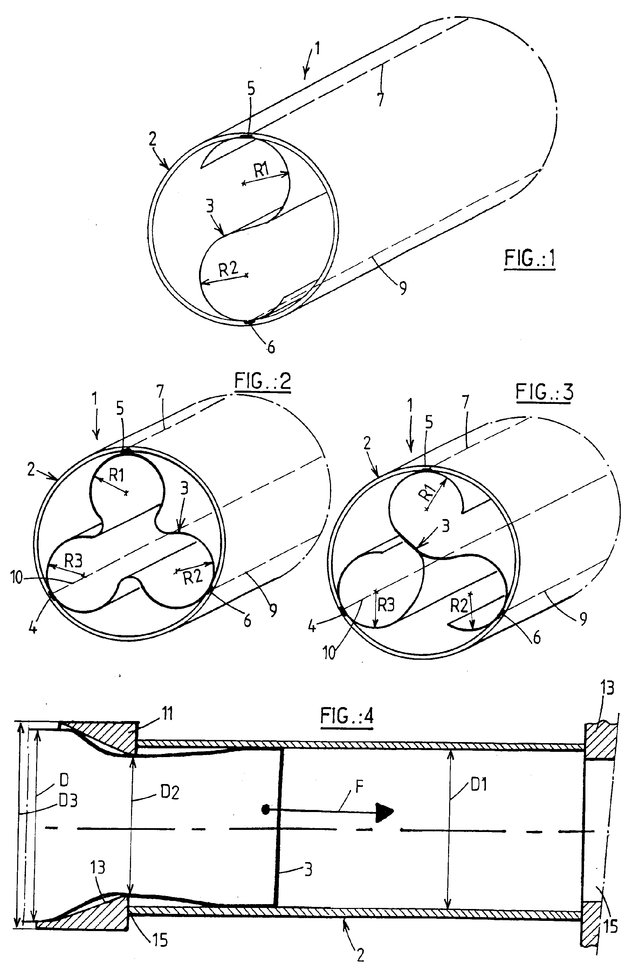

On se reporte à présent aux figures 1 à 3, sur lesquelles on voit que le profilé 1 selon l'invention comprend une partie périphérique 2 de forme tubulaire, et une âme 3 s'étendant longitudinalement à l'intérieur de la partie 2.

La partie périphérique 2 définit de préférence un cylindre à symétrie de révolution.

Dans un premier mode de réalisation représenté sur la figure 1, la section transversale de l'âme 3 définit sensiblement un S.

Dans un second mode de réalisation représenté sur la figure 2, la section transversale de l'âme 3 définit sensiblement un trèfle.

Dans un troisième mode de réalisation représenté sur la figure 3, la section transversale de l'âme 3 définit sensiblement un triskèle.

La partie périphérique 2 est formée dans un matériau rigide, et l'âme 3 est formée dans un matériau élastique tel que l'acier, l'aluminium ou un matériau composite.

La partie périphérique 2 et l'âme 3 peuvent être formées dans le même matériau, ou dans des matériaux différents.

Avant que l'âme 3 ne soit introduite dans la partie périphérique 2, le diamètre D (voir figure 4) du cercle circonscrit à sa section transversale est légèrement supérieur au diamètre intérieur D1 de la partie périphérique 2.

Grâce à cette caractéristique, l'âme 3 doit être introduite à force dans la partie périphérique 2, et elle est maintenue solidaire de cette partie par sa tendance à retrouver élastiquement sont volume naturel.

Les rayons de courbure R1, R2, R3 de l'âme 3 (voir figures 1 à 3) sont adaptés pour assurer une surface de liaison avec la partie périphérique suffisamment étendue pour obtenir le résultat anti-vibratoire recherché, et suffisamment réduite pour permettre l'introduction sans effort excessif de cette âme dans la partie périphérique 2.

En complément de la liaison obtenue grâce à l'élasticité de l'âme 3, on peut souder cette dernière aux deux extrémités de la partie périphérique 2 (voir points de soudure 4, 5, 6 sur les figure 1 à 3).

De manière alternative ou complémentaire, on peut également réaliser un soudage par transparence laser, c'est-à-dire un soudage par l'extérieur à travers la partie périphérique 2, le long des génératrices 7, 9, 10 de contact de l'âme 3 et de cette partie périphérique.

De manière également alternative ou complémentaire, on peut coller l'âme 3 à l'intérieur de la partie périphérique 2.

On se reporte à présent à la figure 2, sur laquelle on a représenté un mode de mise en oeuvre du procédé permettant de fabriquer le profilé sus-décrit.

On commence par fabriquer séparément la partie périphérique 2 et l'âme 3, selon des procédés à la portée de l'homme du métier.

A titre d'exemple, lorsque l'âme 3 est en acier, on peut la fabriquer par calandrage entre des trains de galets de forme.

On s'arrange pour que le diamètre D du cercle circonscrit à la section transversale de l'âme 3 soit légèrement supérieur au diamètre interne D1 de la partie périphérique 2.

Ensuite, on place une filière 11, c'est-à-dire une bague en alliage métallique ou autre matériau présentant une surface intérieure 13 sensiblement tronconique, contre une extrémité 15 de la partie périphérique 2, de telle sorte que le petit diamètre D2 de cette filière se trouve du côté de cette partie périphérique.

Ce petit diamètre D2 est inférieur ou égal au diamètre intérieur D1 de la partie périphérique 2, et le grand diamètre D3 de la filière 11 est supérieur ou égal au diamètre D susmentionné.

Après avoir éventuellement enduit de colle l'âme 3 et/ou l'intérieur de la partie périphérique 2, on place l'âme 3 contre la filière 11, dans le prolongement de la partie périphérique 2, et on l'introduit à force dans cette dernière.

A noter que cette introduction peut s'effectuer de différentes manières, parmi lesquelles on préférera celle consistant à faire reposer la partie périphérique 2 sur un support fixe 13 comportant par exemple un évidement 15, et à exercer un effort de traction F sur l'âme 3 à travers l'évidement 15.

Ce faisant, la filière 11 comprime l'âme 3, permettant à celle-ci de pénétrer à l'intérieur de la partie périphérique 2.

Une fois que l'âme 3 a franchi la filière 11, elle a tendance a retrouver élastiquement son volume naturel, et vient ainsi frotter contre l'intérieur de la partie périphérique 2.

Pour réduire ces frottements et faciliter l'introduction de l'âme 3 dans la partie périphérique 2, on peut avoir recours à une lubrification préalable de l'une ou de ces deux pièces (seulement si on n'utilise pas de colle). Dans ce cas, il faut veiller à ce que cette lubrification ne soit pas trop importante, de manière à éviter qu'une fois en place, l'âme 3 puisse glisser à l'intérieur de la partie périphérique 2.

Enfin, si l'on souhaite renforcer la liaison entre l'âme 3 et la partie périphérique 2, on peut souder cette âme aux extrémités de cette partie périphérique (voir figures 1 à 3).

Pour obtenir une liaison encore plus robuste, on peut souder l'âme 3 par transparence laser le long des génératrices 7, 9, 10 de contact de cette âme avec la partie périphérique 2.

Le mode d'utilisation et les avantages du profilé selon l'invention découlent directement de ce qui précède.

L'âme 3 permet de rigidifier la partie périphérique 2 du profilé 1, et ainsi d'élever les premières fréquences propres de vibration de ce profilé.

Le fait de coller et/ou de souder entre elles l'âme 3 et la partie périphérique 2 permet d'obtenir un ensemble très robuste.

On remarquera que l'on peut également jouer sur les valeurs relatives des rayons de courbure R1, R2 et R3 de l'âme 3 et du rayon intérieur de la partie périphérique 2 pour obtenir un coefficient de frottement entre ces pièces plus ou moins élevé, c'est-à-dire une liaison plus ou moins forte, ainsi que pour jouer sur les premières fréquences propres de vibration du profilé.

On remarquera également que l'on peut choisir l'élasticité du matériau destiné à former l'âme 3 en fonction de la robustesse souhaitée pour cette liaison.

Comme on peut le comprendre à présent, le profilé selon l'invention permet, moyennant un mode de fabrication très simple, avec un moindre poids et sans augmentation de l'encombrement par rapport aux profilés de la technique antérieure, d'obtenir un organe peu sensible aux basses fréquences de vibration notamment d'un véhicule automobile en marche.

Bien entendu, la présente invention n'est pas limitée au mode de réalisation décrit et représenté, fourni à titre d'exemple illustratif et non limitatif.

## Revendications

1. Profilé (1) destiné à former notamment un élément de structure dans un véhicule automobile, comprenant une partie périphérique (2) de forme tubulaire, caractérisé en ce qu'il comprend une âme (3) en matériau élastique introduite à force dans ladite partie périphérique (2) et maintenue solidaire de cette partie périphérique (2) notamment par sa tendance à retrouver élastiquement son volume naturel, pour le but d'élever les premières fréquences propres de vibration dudit profilé (1).

2. Profilé (1) selon la revendication 1, caractérisé en ce que ladite partie périphérique (2) définit sensiblement un cylindre à symétrie de révolution.

3. Profilé (1) selon la revendication 2, caractérisé en ce que la section transversale de ladite âme (3) définit sensiblement un S.

4. Profilé (1) selon la revendication 2, caractérisé en ce que la section transversale de ladite âme (3) définit sensiblement un trèfle.

5. Profilé (1) selon la revendication 2, caractérisé en ce que la section transversale de ladite âme (3) définit sensiblement un triskèle.

6. Profilé (1) selon l'une quelconque des revendications précédentes, caractérisé en ce que les rayons de courbure (R1, R2, R3) de ladite âme (3) sont adaptés pour assurer une surface de liaison avec ladite partie périphérique (2) suffisamment étendue pour obtenir l'élévation de fréquences propres recherchée, et suffisamment réduite pour permettre l'introduction de ladite âme (3) dans ladite partie périphérique (2).

7. Profilé (1) selon l'une quelconque des revendications précédentes, caractérisé en ce que ladite âme (3) est collée à l'intérieur de ladite partie périphérique (2).

8. Profilé (1) selon l'une quelconque des revendications précédentes, caractérisé en ce que ladite âme (3) est soudée aux extrémités de ladite partie périphérique (2).

9. Profilé (1) selon l'une quelconque des revendications précédentes, caractérisé en ce que ladite âme (3) est soudée par transparence laser sur toute la longueur de ladite partie périphérique (2).

10. Profilé (1) selon l'une quelconque des revendications précédentes, caractérisé en ce que ladite partie périphérique (2) et ladite âme (3) sont choisies dans le groupe de matériaux comprenant l'acier, l'aluminium, et les matériaux composites.

11. Profilé (1) selon l'une quelconque des revendications précédentes, caractérisé en ce que ladite partie périphérique (2) et ladite âme (3) sont formées dans des matériaux différents.

12. Procédé de fabrication d'un profilé (1) conforme à l'une quelconque des revendications précédentes, caractérisé en ce qu'il comprend les étapes consistant:
- à fabriquer ladite partie périphérique (2),
- à fabriquer séparément ladite âme (3) avec des dimensions telles que celle-ci ne puisse être introduite qu'à force dans ladite partie périphérique (2),
- à placer une filière (11) contre une extrémité (15) de ladite partie périphérique (2), le grand diamètre (D3) de cette filière (11) étant supérieur ou égal au diamètre (D) du cercle circonscrit à la section transversale de ladite âme (3) et le petit diamètre (D2) de cette filière (11) étant inférieur ou égal à la plus grande dimension transversale intérieure (D1) de ladite partie périphérique (2),
- à présenter ladite âme (3) contre ladite filière (11), dans le prolongement de ladite partie périphérique (2), et
- à introduire à force ladite âme (3) dans ladite partie périphérique (2).

13. Procédé selon la revendication 12, caractérisé en ce qu'on réalise ladite introduction en faisant reposer ladite partie périphérique (2) sur un support fixe (13) et en tirant ladite âme (3) vers l'intérieur de ladite partie périphérique (2).

14. Procédé selon l'une des revendications 12 ou 13, caractérisé en ce qu'on lubrifie ladite partie périphérique (2) et/ou ladite âme (3) préalablement à ladite introduction, de manière à faciliter cette dernière.

15. Procédé selon l'une des revendications 12 ou 13, caractérisé en ce qu'on enduit ladite âme (3) et/ou l'intérieur de ladite partie périphérique (2) de colle préalablement à ladite introduction.

16. Procédé selon l'une quelconque des revendications 12 à 15, caractérisé en ce qu'il comprend l'étape supplémentaire consistant à souder ladite âme (3) aux extrémités de ladite partie périphérique (2).

17. Procédé selon l'une quelconque des revendications 12 à 15, caractérisé en ce qu'il comprend l'étape supplémentaire consistant à souder ladite âme (3) par transparence laser sur toute la longueur de ladite partie périphérique (2).
